Europäisches Patentamt

European Patent Office

Office européen des brevets

(11) Veröffentlichungsnummer : **0 098 260**
**B1**

# EUROPÄISCHE PATENTSCHRIFT

(45) Veröffentlichungstag der Patentschrift :
**17.08.88**

(51) Int. Cl.⁴ : **H 04 L 5/14**

(21) Anmeldenummer : **83890102.3**

(22) Anmeldetag : **17.06.83**

(54) Schaltungsanordnung zur Kontrolle der synchronen Übertragung von Daten.

(30) Priorität : **24.06.82 AT 2458/82**

(43) Veröffentlichungstag der Anmeldung :
**11.01.84 Patentblatt 84/02**

(45) Bekanntmachung des Hinweises auf die Patenterteilung : **17.08.88 Patentblatt 88/33**

(84) Benannte Vertragsstaaten :
**BE CH DE FR GB IT LI NL SE**

(56) Entgegenhaltungen :
**EP-A- 0 033 821**
**FR-A- 2 404 970**
**US-A- 4 007 449**

(73) Patentinhaber : **VOEST-ALPINE Aktiengesellschaft**
**Friedrichstrasse 4**
**A-1011 Wien (AT)**

(72) Erfinder : **Posch, Reinhard Dr.**
**Pachern Hauptstrasse 111**
**A-8042 Graz (AT)**

(74) Vertreter : **Haffner, Thomas M., Dr. et al**
**Patentanwaltskanzlei Dipl.-Ing. Adolf Kretschmer Dr.**
**Thomas M. Haffner Schottengasse 3a**
**A-1014 Wien (AT)**

## Beschreibung

Die Erfindung betrifft eine Schaltungsanordnung zur Kontrolle der synchronen Übertragung von Daten über eine Datenfernübertragungsleitung, welche zwischen einer Daten abgebenden oder empfangenden Einheit, beispielsweise einem Rechner oder einem Endgerät, und einem Modem angeordnet ist und einen Prozessor enthält.

Der gleiche fachverhalt ist gegenstand der Europäischen Anmeldung 83 890 101.5 (Anmeldetag 17.6.83, Prioritätstag 24.6.82).

Aus der EP-A-33 821 ist ein intelligentes Interface für die selbsttätige Handhabung einer Wähl- oder Standleitung, wie einer Telefonleitung, bekannt. Hiebei sind neben einer Gabelschaltung unter anderem ein Umschaltrelais, ein Modem, ein Programmspeicher und ein Speicher mit wahlfreiem Zugriff vorgesehen, welche von einem Prozessor verwaltet werden. Der Speicher mit wahlfreiem Zugriff soll hiebei als Textspeicher- und als Rufnummernspeicher zum selbsttätigen Wählen der anzurufenden Gegenstation dienen. Weiters sind neben einem Detektor für Datensignale auch ein Detektor für Amtszeichen und ein Anrufdetektor vorhanden, durch deren Zusammenwirken vor allem der selbsttätige Verbindungsaufbau zu der Gegenstation bewerkstelligt werden soll.

Aus der US-A-4 007 449 ist eine Schaltungsanordnung zur Kontrolle der asynchronen Übertragung von Daten zwischen zwei Stellen bekannt, wobei jeder Übertragung von acht Datenbits ein Startbit vorausgeht und zwei Stoppbits nachfolgen. Auf die beiden Stoppbits eines Datenbytes kann das Starbit eines nachfolgenden Datenbytes unmittelbar oder aber nach einer Pause folgen. Diese Schaltungsanordnung dient dazu, neben der seriellen Fernübertragung von Daten mittels Modems auch lokale Verbindungen zwischen den beiden Stellen ohne Verwendung der Modems in solcher Weise zu ermöglichen, daß dem Steuerbaustein der einen Stelle der Datenübertragungsbaustein der anderen Stelle als Modem erscheint.

Allgemein erfolgen Datenübertragungen in der Weise, daß von einem Rechner die Information samt der Kontrolle, die der Prüfung auf Übertragungsfehler dient, abgesandt wird und am anderen Ende der Leitung (peripheres Gerät) geprüft wird, ob die Information richtig angekommen ist. Ist die Information verstümmelt angekommen, müßte sie noch einmal gesandt werden. Dieser Prüfvorgang auf Richtigkeit und Vollständigkeit der übertragenen Information belastet einerseits den Rechner und schränkt anderseits die zu verwendenden peripheren Geräte auf spezielle Typen ein, die dem verwendeten Prüfverfahren entsprechen, zumal aus Konkurrenzgründen viele Herstellerfirmen ihre eigenen Prüfverfahren verwenden.

Somit war bisher der Rechner in seiner Leistungsfähigkeit eingeschränkt und anderseits ein Zwang zu speziellen Gerätetypen gegeben. Zu dem kommt, daß die Übertragungsleitung bezüglich der Datenrate einen Engpaß darstellt.

Es ist bekannt, bei der Datenübertragung zwischen Datenverarbeitungsanlagen die Prozedurschritte nach einem Programm zu steuern, wobei die jeweilige Datenverarbeitungseinrichtung, die mit einer entfernten Datenverarbeitungsanlage den Datenaustausch durchführt, mitverwendet wird. Dies hat den Nachteil, daß die Datenverarbeitungseinrichtung über ihre eigentliche Aufgabe hinaus mit den für die Datenübertragung erforderlichen Prozedur-Steuerungsaufgaben belastet ist.

Man war daher bestrebt, die Datenverarbeitungseinrichtung von allen mit Datenübertragungs-Prozeduren im Zusammenhang stehenden Aufgaben zu entlasten. Zur Abhilfe wurde vorgeschlagen, innerhalb der Datenverarbeitungsanlage, von welcher ein Datenaustausch mit einer entfernten Datenverarbeitungsanlage durchgeführt werden soll, zur Steuerung von Datensende- und -empfangs-Prozeduren zwischen der lokalen Datenverarbeitungseinrichtung und einem eine Datenleitung abschließenden Modem einen Datenübertragungs-Prozessor anzuordnen. Dadurch ist die gewünschte Entlastung der Datenverarbeitungsanlage von der Steuerung und Überwachung der Datenfernübertragung erreicht. Der Datenübertragungs-Prozessor nach dem bekannten Vorschlag ist aber nicht universell anwendbar, weil er in eine Datenverarbeitungsanlage fest einzubauen ist und Daten von der Datenverarbeitungseinrichtung über interne Verbindungen erhält bzw. über diese Verbindungen Daten an die Datenverarbeitungseinrichtung liefert und somit an die Art und Weise, wie die Daten seitens der Datenverarbeitungseinrichtung an diesen Verbindungen vorliegen, angepaßt sein muß. Ferner enthält der bekannte Datenübertragungs-Prozessor zwischen einem eingebauten, als Steuereinrichtung dienenden Mikrorechner und seiner Anschlußstelle zur Verbindung mit dem eine Datenleitung abschließenden Modem einen Synchron/Asynchron-Sender/Empfänger zur Parallel/Seriell- und Seriell/Parallel-Zeichenumsetzung, wobei das Modem über eine serielle Schnittstelle anschließbar ist. Dadurch, daß der als Steuereinrichtung des Datenübertragungs-Prozessors dienende Mikrorechner von der der Datenfernleitung zugewendeten Seite nicht unmittelbar zugänglich ist, wäre eine gegebenenfalls gewünschte Erweiterung der Steuerung der Datenfernübertragung für eine möglichst vollständige und sichere Ausnützung der Datenfernleitung mit Schwierigkeiten verbunden.

Die Erfindung zielt darauf ab, eine Schaltungsanordnung zur Kontrolle der Übertragung von Daten über eine Datenfernübertragungsleitung mit hoher Durchsatzleistung bei hoher Sicherheit zu schaffen, wobei die verwendung kostengünstiger Peripheriegeräte möglich sein soll. Zur Lösung dieser Aufgabe besteht die Erfindung darin, daß die Schaltungsanordnung über eine Standardschnittstelle, wie z. B. V 24 od. dgl., an die Daten abgebende oder empfangende Einheit angeschlossen ist, daß der parallele Ausgang des einen Datenpufferspeicher und einen eigenen Taktgenerator aufweisenden Prozessors, insbesondere eines Mikrocomputers, an das Modem angeschlossen ist und daß der Prozessor bzw. Mikrocomputer über einen Asynchron-Sender/Empfänger mit der seriellen Standardschnittstelle verbunden ist.

Dadurch, daß der Prozessor außerhalb der Konfiguration der Datenverarbeitungsanlage liegt und über eine normierte Schnittstelle mit dieser in Verbindung steht, ist der Anschluß der peripheren Geräte nicht auf spezielle Typen eingeschränkt. Der Einsatz von speziell auf Durchsatz und Antwortgeschwindigkeit ausgelegten Prozeduren, die für die bislang verwendeten Systeme wegen der dadurch bedingten Rechnerbelastung zu umfangreich waren, ist dadurch möglich. Auf Teile einer konventionellen Übertragungskontrolle (Adressierung, Statusanzeige) kann verzichtet werden. Zweckmäßig sind identische Datenpufferspeicher auf der Sender- und Empfangsseite vorgesehen, welche die zu transportierenden Informationen zunächst aufnehmen und dann je nach den Verhältnissen auf der Datenfernübertragungsleitung weitergeben. Dadurch können allgemeine, zeitraubende Abfragen über den Kommunikationszustand entfallen. Dadurch wird eine Übertragung der Daten in enger Abhängigkeit vom Aufnahmevermögen der Datenfernübertragungsleitung ermöglicht, was besonders dann von Bedeutung ist, wenn diese mehrere Geräte versorgen muß.

Die Datenkommunikation erfolgt zwischen zwei mit Standardschnittstellen ausgestatteten Endpunkten, die mittels einer Stand- oder Wählleitung in Verbindung gebracht werden können. Die Verbindung kann zwischen Rechner und Rechner, zwischen Rechner und Endgerät oder zwischen Endgerät und Endgerät hergestellt werden. Hiebei bildet die erfindungsgemäße Schaltungsanordnung einen Umsetzer zwischen einer ungesicherten, seriellen asynchronen Übertragung, die vom und zum Endpunkt hin stattfindet, und einer quasisynchronen, dynamischen blockorientierten Übertragung, die (sendeseitig) vom und (empfangseitig) zum Modem hin stattfindet.

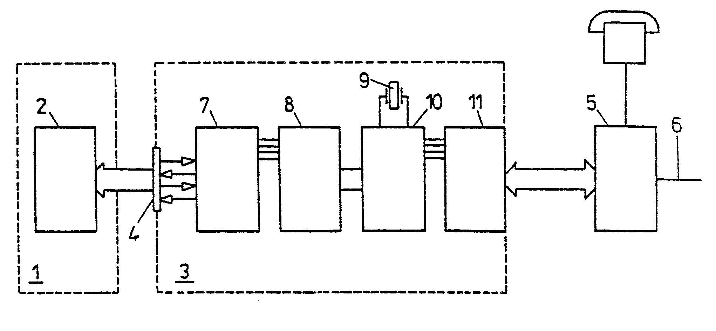

Die Erfindung wird nachfolgend an Hand eines in der Zeichnung dargestellten Ausführungsbeispiels näher erläutert.

Mit einem einen Bestandteil einer Datenverarbeitungsanlage 1 bildenden Endgerät 2 steht die erfindungsgemäße Schaltungsanordnung 3 einerseits über eine Standardschnittstelle 4, z. B. V 24, in Verbindung und ist anderseits mit einem Modem 5 verbunden, an das eine Datenfernübertragungsleitung 6, beispielsweise eine Telefonleitung, angeschlossen ist. Die erfindungsgemäße Schaltungsanordnung stellt eine Datenübertragungskontrolleinrichtung dar und enthält zu diesem Zweck anschließend an die serielle Standardschnittstelle 4 zur Pegelanpassung der Signale einen Pegelkonverter 7 und nachfolgend einen Synchron/Asynchron-Sender/Empfänger 8 zur Seriell/Parallel-Zeichenumsetzung der von der Datenverarbeitungsanlage 1 abgehenden Signale bzw. zur Parallel/Seriell-Zeichenumsetzung der ankommenden Signale. Ein wesentlicher Bestandteil dieser erfindungsgemäßen Schaltungsanordnung ist ein einen Taktgeber 9 aufweisender Mikroprozessor 10, dessen Datenbus mit dem Sender/Empfänger 8 verbunden ist. Der Mikroprozessor 10 kann entweder mit einem gesonderten Datenpuffer in Form eines Speichers mit wahlfreiem Zugriff (RAM) und einem gesonderten Programmspeicher in Form eines Festwertspeichers (z. B. EPROM) zusammengeschaltet sein oder es kann an dieser Stelle ein Mikrocomputer verwendet werden, der die zentrale Steuereinheit des Mikroprozessors, den Datenpuffer und den Programmspeicher auf einem einzigen integrierten Schaltkreis enthält.

Für die Erzielung einer guten Anpassungsfähigkeit an die Übertragungsmöglichkeit der Datenfernübertragungsleitung 6 ist es wichtig, daß die Ein- und Ausgänge des Mikroprozessors 10 an der zur Verbindung mit dem die Datenfernübertragungsleitung 6 abschließenden Modem 5 dienenden Anschlußstele zugänglich sind. Dies wäre bei Vorhandensein eines dem Sender/Empfänger 8 entsprechenden weiteren Sender/Empfängers nicht gewährleistet. Bei dieser Anschlußstelle ist daher lediglich erforderlichenfalls ein Pegelkonverter 11 vorgesehen.

Die Standardschnittstelle 4 zur Verbindung mit der Daten abgebenden oder empfangenden Einheit gestattet ein Zusammenarbeiten mit beliebigen Rechnern oder Endgeräten und die gute Zugänglichkeit des Mikroprozessors von der dem Modem zugewendeten Anschlußstelle der Schaltungsanordnung 3 ermöglicht eine weitgehende Beeinflussung und Steuerung der Datenübertragung in Abhängigkeit von den Gegebenheiten des Übertragungskanals, was besonders beim Halbduplexverkehr über Telefonleitungen von Bedeutung ist. Hiebei wird vom zentralen Taktgenerator 9 der Schaltungsanordnung 3 ein hochpräziser Übertragungstakt abgeleitet, welcher die synchrone Übertragung auch großer Blocklängen mit minimalem Synchronisierungsaufwand zuläßt.

**Patentanspruch**

Schaltungsanordnung (3) zur Kontrolle der synchronen Übertragung von Daten über eine Datenfernübertragungsleitung (6), welche zwischen einer Daten abgebenden oder empfangenden Einheit, beispielsweise einem Rechner oder einem Endgerät (2), und einem Modem (5) angeordnet ist und einen Prozessor (10) enthält, dadurch gekennzeichnet, daß die Schaltungsanordnung (3) über eine Standardschnittstelle (4), wie z. B. V24 od. dgl., an die Daten abgebende oder empfangende Einheit angeschlossen ist, daß der parallele Ausgang des einen Datenpufferspeicher und einen eigenen Taktgenerator (9) aufweisenden Prozessors (10), insbesondere eines Mikrocomputers, an das Modem (5) angeschlossen ist und daß der Prozessor (10) bzw. Mikrocomputer über einen Asynchron-Sender/Empfänger (8) mit der seriellen Standardschnitt-stelle (4) verbunden ist.

**Claim**

Circuit arrangement (3) for controlling the synchronous transmission of data via a remote data transmission line (6) which is arranged between a unit emitting or receiving data, for example a computer or a terminal (2), and a modem (5) and contains a processor (10), characterized in that the circuit arrangement (3) is connected via a standard interface (4) such as, for example, V24 or similar, to the unit emitting or receiving data, in that the parallel output of the processor (10) exhibiting a data buffer store and a separate clock generator (9), particularly of a microcomputer, is connected to the modem (5) and in that the processor (10) or micro-computer is connected via an asynchronous transmitter/receiver (8) to the standard serial interface (4).

**Revendication**

Montage (3) pour contrôler la transmission synchrone de données par l'intermédiaire d'une ligne (6) de transmission de données à grande distance, qui est disposée entre une unité délivrant ou recevant des données, par exemple un ordinateur ou un appareil terminal (2), et un modem (5) et contient un processeur (10), caractérisé en ce que le montage (3) est raccordé par l'intermédiaire d'une interface standard (4), comme par exemple V24 ou analogue, à l'unité délivrant ou recevant des données, que la sortie en parallèle du processeur (10), notamment un micro-ordinateur, qui contient une mémoire tampon de données et un générateur particulier de cadence (9), est raccordée au modem (5) et que le processeur (10) ou le micro-ordinateur est relié par l'intermédiaire d'un émetteur/récepteur asynchrone (8) à l'interface standard série (4).